# EUROPEAN PATENT APPLICATION

(11) **EP 4 714 313 A1**
(43) Date of publication of application: **25.03.2026**
(21) Application number: 24806209.3
(22) Date of filing: 01.04.2024
(51) Int. Cl.: A47J 31/44

(54) **AIR EXTRACTION AND EXHAUST DEVICE AND COLD BREW COFFEE MACHINE**

(30) Priority: 15.05.2023 CN 202321159986 U
(71) Applicant: XIAMEN MYLUX INTELLIGENT TECHNOLOGY CO., LTD, Xiamen, Fujian 361100 (CN)
(72) Inventor: ZHOU, Yiyun, 361100 Fujian (CN)
(74) Representative: Cabinet Chaillot
(86) International application number: PCT/CN2024/085238
(87) International publication number: WO 2024/234849

(57) **Abstract**

The present invention relates to the technical field of coffee machines. Disclosed are an air extraction and exhaust device and a cold brew coffee machine. The air extraction and exhaust device comprises a main machine shell, and an air pump, a motor, a rotating disc, a first air pipe, a second air pipe and a third air pipe which are arranged in the main machine shell. The air extraction and exhaust device uses the structural design of a single air pump and a single motor, and the rotating disc is driven by the motor to rotate forwards or reversely, such that connection states of various air pipes are switched, thereby cooperating with the air pump to realize automatic switching of an air extraction state or an air exhaust state. The air extraction and exhaust device has the advantages of being compact in terms of structure, ingenious in terms of design, small in terms of size, and easy and convenient to operate, and facilitates improvement of the extraction effect and the extraction efficiency of the cold brew coffee machine.

## Description

### BACKGROUND OF THE PRESENT INVENTION

### FIELD OF INVENTION

The present invention relates to the technical field of coffee machines, and in particular to an air extraction and exhaust device and a cold brew coffee machine.

### DESCRIPTION OF RELATED ARTS

Cold brew coffee is coffee liquid obtained by soaking coffee grounds in cold water for several hours and then filtering. Since there is no heating, the acidity of cold brew coffee becomes very soft, the sweetness increases significantly, and the texture becomes smoother. The cold brew machine uses an air pump to suck in and blow out air, causing the cold water to circulate repeatedly between the inner and outer cups, thereby repeatedly brewing coffee, effectively increasing the extraction speed, and shortening people's waiting time.

The air extraction and exhaust device of the conventional cold brew coffee machine typically adopts two structures: one is a dual-pump structure, where one pump is used for suction and another for exhaust; the other is a single pump with dual solenoid valves, where the dual solenoid valves control the single pump to switch between drawing and venting air. However, both of these suction and exhaust devices commonly suffer from the issue of complex structure, which is not conducive to production and assembly.

### SUMMARY OF THE PRESENT INVENTION

The present invention provides an air extraction and exhaust device and a cold brew coffee machine, the main purpose of which is to solve the problem of the complex structure of the air extraction and exhaust device in conventional cold brew coffee machines.

The present invention adopts the following technical solution:
An air extraction and exhaust device includes a main machine shell and an air pump, a motor, a rotating disc, a first air pipe, a second air pipe, and a third air pipe which are arranged in the main machine shell, wherein the rotating disc is driven and connected to the motor, and a first chamber, a second chamber, and a third chamber are independently provided between the rotating disc and the main machine shell, wherein the main machine shell has a first vent provided on a side wall thereof, a second vent provided at the bottom of the second chamber, and a third vent provided at the bottom of the third chamber, wherein one end of the first air pipe is connected to the first vent, and the other end is connected to the first chamber through the rotating disc; one end of the second air pipe is connected to the inlet of the air pump, and the other end is connected to the second chamber or the first chamber through the rotating disc; one end of the third air pipe is connected to the outlet of the air pump, and the other end is connected to the first chamber or the third chamber through the rotating disc.

Further, the main machine shell has a mounting groove provided therein, wherein the mounting groove has a first sealing ring provided on an outer periphery thereof, and the mounting groove has the second vent and the third vent provided therein, wherein a second sealing ring and a third sealing ring are respectively installed on the outer periphery of the second vent and the third vent, wherein the bottom of the rotating disc abuts against the first sealing ring, the second sealing ring, and the third sealing ring, thereby dividing the mounting groove into a first chamber, a second chamber, and a third chamber.

Further, the main machine shell has a first annular protrusion disposed therein, and the mounting groove is formed in the first annular protrusion; wherein the rotating disc has a relief groove at the corresponding position of the mounting groove, wherein the first sealing ring abuts against the outer peripheral edge of the relief groove, and the second sealing ring and the third sealing ring abut against the interior of the relief groove.

Furthermore, the first annular protrusion has an annular stepped surface provided thereon, the rotating disc has an annular recess provided at the bottom thereof, wherein the first sealing ring is installed between the annular stepped surface and the annular recess.

Furthermore, the mounting groove has a second annular protrusion and a third annular protrusion disposed therein, wherein the second annular protrusion and the third annular protrusion, respectively, have the second vent and the third vent disposed therein, and respectively have a second groove and a third groove for installing the second sealing ring and the third sealing ring.

Further, the rotating disc has an arc-shaped protrusion arranged on an upper end surface thereof, and the arc-shaped protrusion has a limiting projection each arranged at both ends thereof, wherein the air extraction and exhaust device further includes an inner frame disposed inside the main machine shell, wherein the inner frame has a mounting part disposed thereon for mounting the rotating disc and an arc-shaped limiting block disposed thereon that abuts against the limiting projection.

Further, the motor has an output shaft and a drive wheel, and the rotating disc has wheel teeth arranged on an outer side wall thereof that engage with the drive wheel.

Further, the rotating disc has a first interface for installing the first air pipe, and a second interface and a third interface for installing the second air pipe and the third air pipe provided at a side of the first interface.

A cold brew coffee machine includes an upper inner cup, a lower inner cup, and an outer cup; wherein the upper end of the upper inner cup is provided with an air extraction and exhaust device as described above.

Compared with conventional technologies, the beneficial effects of the present invention are as follows:
The present invention optimizes and improves the air extraction and exhaust device of a cold brew coffee machine, and innovatively adopts a single air pump and single motor structure design. The motor drives the rotating disc to rotate forward or reverse, thereby realizing the switching of the connection status of each air pipe, and then working with the air pump to realize the automatic switching of an air extraction state or an air exhaust state. Compared with conventional technologies, the present invention has the advantages of compact structure, ingenious design, small size, and simple and convenient operation, which helps to improve the extraction effect and extraction efficiency of the cold brew coffee machine.

### BRIEF DESCRIPTION OF THE DRAWINGS

FIG. 1 is a perspective view of the structure of the present invention.
FIG. 2 is an exploded view (1) of the air extraction and exhaust device of the present invention.
FIG. 3 is an exploded view (2) of the air extraction and exhaust device of the present invention.
FIG. 4 is a view of an air exhaust state of the air extraction and exhaust device of the present invention.
FIG. 5 is a sectional view of the exhaust state of the present invention.
FIG. 6 is a view of air extraction state of the air extraction and exhaust device of the present invention.
FIG. 7 is a sectional view of the exhaust state of the present invention.

As shown in the view: 1-upper inner cup; 2-lower inner cup; 3-outer cup; 30-liquid receiving cavity; 4-air extraction and exhaust device; 41-main machine shell; 401-first chamber; 402-second chamber; 403-third chamber; 405-first sealing ring; 406-second sealing ring; 407-third sealing ring; 408-first annular protrusion; 409-second annular protrusion; 410-third annular protrusion; 413-first vent; 414-second vent; 415-third vent; 416-button; 417-top cover; 42-air pump; 43-motor; 431-drive wheel; 44-rotating disc; 440-recess groove; 441-annular recess; 442-arc-shaped protrusion; 443-limiting projection; 444-wheel teeth; 445-first interface; 446-second interface; 447-third interface; 45-first air pipe; 46-second air pipe; 47-third air pipe; 48-inner frame; 481-mounting part; 482-arc-shaped limiting block; 49-battery.

### DETAILED DESCRIPTION OF THE PREFERRED EMBODIMENT

The specific embodiments of the present invention are described below with reference to the accompanying drawings. To provide a full understanding of the present invention, many details are described below, but those skilled in the art can implement the present invention without these details.

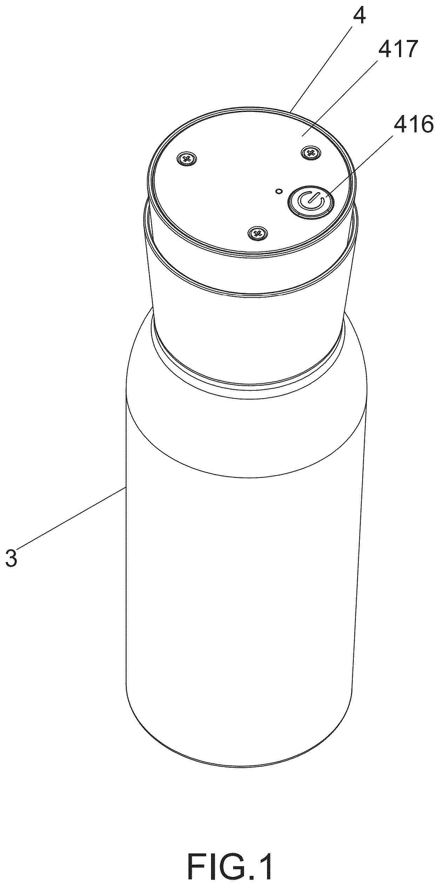

As shown in Figs. 1, 5, and 7, the embodiment provides a cold brew coffee machine, including an upper inner cup 1, a lower inner cup 2, and an outer cup 3; an upper end of the upper inner cup 1 is connected with an air extraction and exhaust device 4, and a lower end thereof is connected with the lower inner cup 2; the outer cup 3 is sleeved on the outside of the upper inner cup 1 and the lower inner cup 2, and a liquid receiving cavity 30 is provided between the outer cup 3 and the upper inner cup 1 and the lower inner cup 2. The air extraction and exhaust device 4 is communicated to the upper inner cup 1, the lower inner cup 2, and the liquid receiving cavity 30 and is used to perform suction or exhaust operations, thereby drawing the water from the liquid receiving cavity 30 into the upper inner cup 1 and the lower inner cup 2 or draining the water from the upper inner cup 1 and the lower inner cup 2 into the liquid receiving cavity 30.

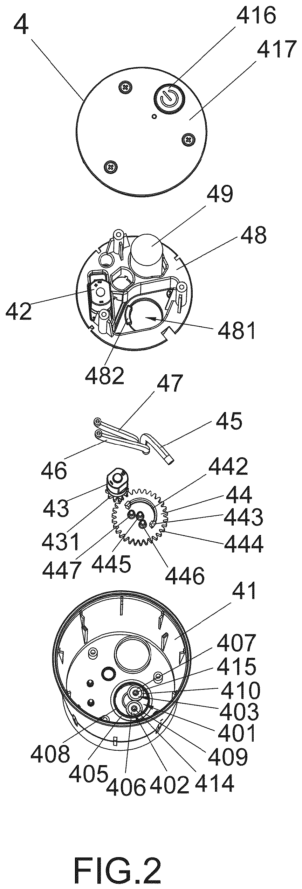

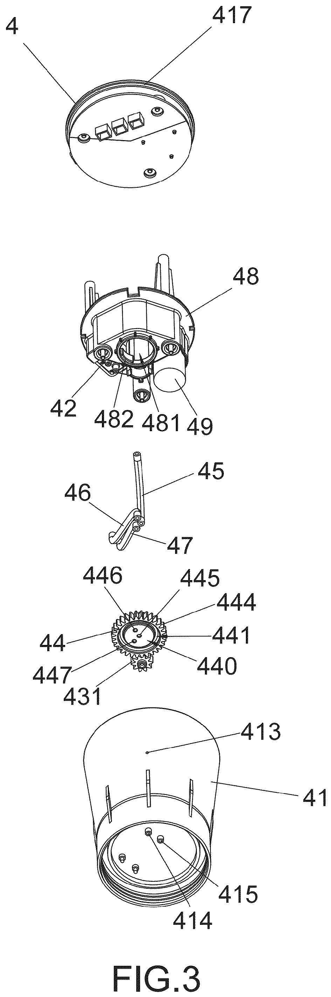

As shown in Figures 2 and 3, the air extraction and exhaust device 4 includes a main machine shell 41 and an air pump 42, a motor 43, a rotating disc 44, a first air pipe 45, a second air pipe 46, and a third air pipe 47 disposed within the main machine shell 41, wherein the rotating disc 44 is driven and connected to the motor 43, and a first chamber 401, a second chamber 402, and a third chamber 403 are independently provided between the rotating disc 44 and the main machine shell 41, wherein the main machine shell 41 has a first vent 413 provided on a side wall thereof, a second vent 414 provided at the bottom of the second chamber 402, and a third vent 415 provided at the bottom of the third chamber 403, wherein one end of the first air pipe 45 is connected to the first vent 413, and the other end is connected to the first chamber 401 through the rotating disc 44; one end of the second air pipe 46 is connected to the outlet of the air pump 42, and the other end is connected to the second chamber 402 or the first chamber 401 through the rotating disc 44; one end of the third air pipe 47 is connected to the inlet of the air pump 42, and the other end is connected to the first chamber 401 or the third chamber 403 through the rotating disc 44. During operation, the rotating disc 44 is driven by the motor 43 to rotate forwards or reversely, thereby driving the second air pipe 46 to switch back and forth between the second chamber 402 and the first chamber 401, and driving the third air pipe 47 to switch back and forth between the first chamber 401 and the third chamber 403, thus realizing air extraction or exhaust.

As shown in Figures 2 to 7, the main machine shell 41 has a mounting groove provided therein (not shown in the figures), wherein the mounting groove has a first sealing ring 405 provided on an outer periphery thereof, and the mounting groove has a second vent 414 and a third vent 415 provided therein, wherein a second sealing ring 406 and a third sealing ring 407 are respectively installed on the outer periphery of the second vent 414 and the third vent 415, wherein the bottom of the rotating disc 44 abuts against the first sealing ring 405, the second sealing ring 406, and the third sealing ring 407, thereby dividing the mounting groove into a first chamber 401, a second chamber 402, and a third chamber 403. The present invention cleverly uses multiple sealing rings to separate and make each chamber independent, which simplifies the structure of the main machine shell 41 and the rotating disc 44, and also facilitates sealing, thereby ensuring the air extraction and exhaust effects.

As shown in Figs. 2 to 7, specifically, the main machine shell 41 has a first annular protrusion 408 disposed therein, and the mounting groove is formed in the first annular protrusion 408; the rotating disc 44 has a relief groove 440 at the corresponding position of the mounting groove, the first sealing ring 405 abuts against the outer peripheral edge of the relief groove 440, and the second sealing ring 406 and the third sealing ring 407 abut against the interior of the relief groove 440. The design of the first annular protrusion 408 and the relief groove 440 makes the fit between the rotating disc 44 and the main machine shell 41 tighter and more secure, and helps to improve the sealing performance of each chamber.

As shown in Figures 2 to 7, more specifically, the first annular protrusion 408 has an annular stepped surface provided thereon, the rotating disc 44 has an annular recess 441 provided at the bottom thereof, and the first sealing ring 405 is installed between the annular stepped surface and the annular recess 441; the mounting groove has a second annular protrusion 409 and a third annular protrusion 410 disposed therein, the second annular protrusion 409 and the third annular protrusion 410, respectively, have a second vent 414 and a third vent 415 disposed therein, and respectively have a second groove (not shown in the figures) and a third groove (not shown in the figures) for installing the second sealing ring 406 and the third sealing ring 407. The present invention refines the installation structure of each sealing ring, thereby ensuring stable and reliable assembly of the sealing rings and further improving their sealing performance.

As shown in Fig. 2 and Fig. 3, the rotating disc 44 has an arc-shaped protrusion 442 arranged on an upper end surface thereof, and the arc-shaped protrusion 442 has a limiting projection 443 each arranged at both ends thereof. The air extraction and exhaust device 4 further includes an inner frame 48 disposed inside the main machine shell 41, wherein the inner frame 48 has a mounting part 481 disposed thereon for mounting the rotating disc 44 and an arc-shaped limiting block 482 disposed thereon that abuts against the limiting projection 443. When the rotating disc 44 rotates, the limiting projection 443 and the arc-shaped limiting block 482 can effectively limit the movement, thereby ensuring that the second air pipe 46 and the third air pipe 47 can be accurately connected to the required chamber.

As shown in Figs. 2 to 7, the air extraction and exhaust device 4 further includes a battery 49 that powers the air pump 42 and the motor 43. The air pump 42, motor 43 and battery 49 are all arranged in the main machine shell 41 through the inner frame 48.

As shown in Figs. 2 and 3, the motor 43 has an output shaft and a drive wheel 431, and the rotating disc 44 has wheel teeth 444 arranged on an outer side wall thereof that engage with the drive wheel 431.

As shown in Figs. 2 and 3, the rotating disc 44 has a first interface 445 for installing the first air pipe 45, provided in a middle thereof, and a second interface 446 and a third interface 447 for installing the second air pipe 46 and the third air pipe 47, provided at a side of the first interface 445.

As shown in Figs. 2 to 7, the specific working principle of the air extraction and exhaust device 4 is explained below:
a button 416 is provided on a top cover 417 of the main machine shell 41, if the button 416 is double-clicked, the air extraction and exhaust device 4 will enter a cycle working mode, first blowing air, then venting air, then blowing air again, and then venting air again, and so on, working repeatedly for 12 minutes; if the button 416 is held down for a long time, the air extraction and exhaust device 4 will blow air continuously.

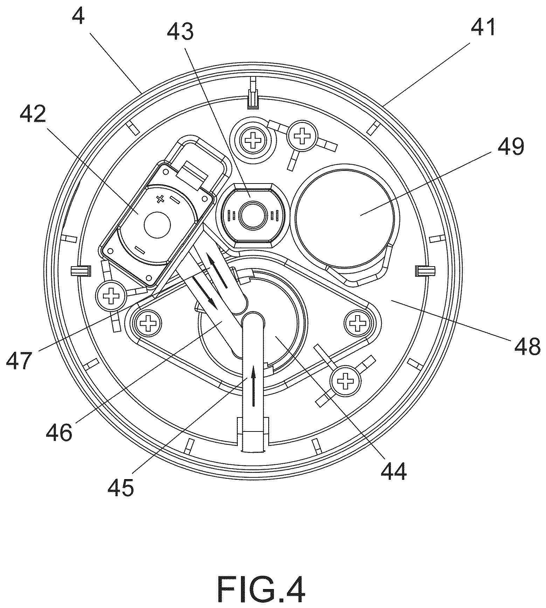

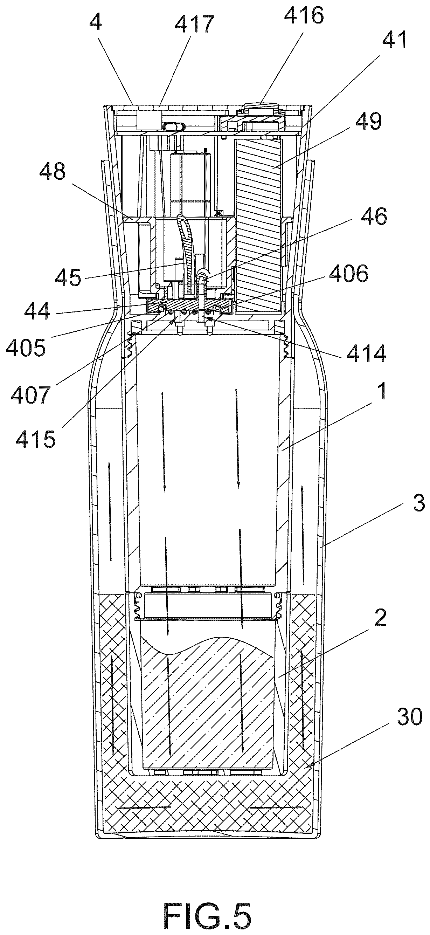

In an air exhaust state, the motor 43 rotates forward, thereby driving the rotating disc 44 to rotate and realize the connection and switching of each air pipe. Referring to Figs. 4 and 5, specifically, one end of the first air pipe 45 is connected to the first vent 413, and the other end is connected to the first chamber 401; one end of the second air pipe 46 is connected to the outlet of the air pump 42, and the other end is connected to the second chamber 402; one end of the third air pipe 47 is connected to the inlet of the air pump 42, and the other end is connected to the first chamber 401. When the air pump 42 is started, the outside air enters the first chamber 401 from the first vent 413 along the first air pipe 45, and under the pressure of the air pump 42, the air enters the air pump 42 from the third air pipe 47, then enters the second chamber 402 through the second air pipe 46, and finally is blown into the upper inner cup 1 and the lower inner cup 2 from the second vent 414, thereby realizing the process of water being discharged from the upper inner cup 1 and the lower inner cup 2 into the liquid receiving cavity 30.

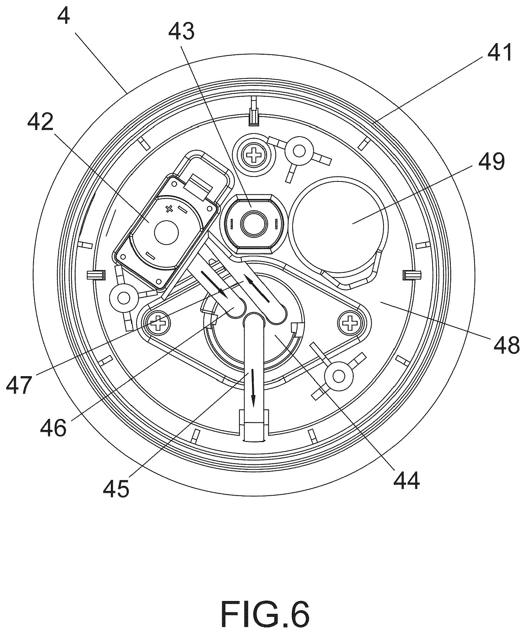

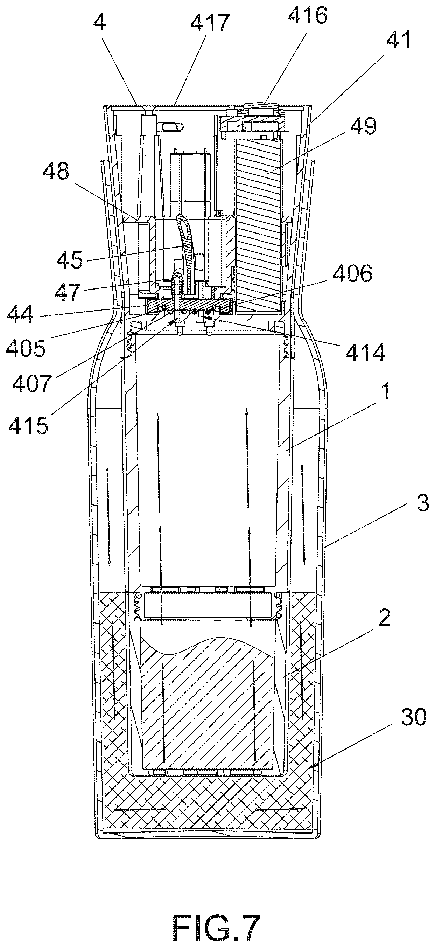

In an air extraction state, the motor 43 rotates reverses, thereby driving the rotating disc 44 to rotate and realize the connection and switching of each air pipe. Referring to Figs. 6 and 7, specifically, one end of the first air pipe 45 is connected to the first vent 413, and the other end is connected to the first chamber 401; one end of the second air pipe 46 is connected to the outlet of the air pump 42, and the other end is connected to the first chamber 401; one end of the third air pipe 47 is connected to the inlet of the air pump 42, and the other end is connected to the third chamber 403. When the air pump 42 is started, the air in the upper inner cup 1 and the lower inner cup 2 enters the third chamber 403 through the third vent 415, then enters the air pump 42 through the third air pipe 47, and then enters the first chamber 401 through the second air pipe 46, and finally discharges into the outside air from the first vent 413 through the first air pipe 45, thus realizing the process of water being drawn from the liquid receiving cavity 30 into the upper inner cup 1 and the lower inner cup 2.

The above are merely specific embodiments of the present invention, but the design concept of the present invention is not limited thereto. Any non-substantial modifications made to the present invention using this concept shall be considered as infringing upon the protection scope of the present invention.

## Claims

1. An air extraction and exhaust device, comprising: a main machine shell and an air pump, a motor, a rotating disc, a first air pipe, a second air pipe and a third air pipe which are arranged in the main machine shell;
wherein the rotating disc is driven and connected to the motor, and a first chamber, a second chamber, and a third chamber are independently provided between the rotating disc and the main machine shell, wherein the main machine shell has a first vent provided on a side wall thereof, a second vent provided at the bottom of the second chamber, and a third vent provided at the bottom of the third chamber;
wherein one end of the first air pipe is connected to the first vent, and the other end is connected to the first chamber through the rotating disc; one end of the second air pipe is connected to the outlet of the air pump, and the other end is connected to the second chamber or the first chamber through the rotating disc; one end of the third air pipe is connected to the inlet of the air pump, and the other end is connected to the first chamber or the third chamber through the rotating disc.

2. The air extraction and exhaust device, as recited in claim 1, wherein the main machine shell has a mounting groove provided therein, wherein the mounting groove has a first sealing ring provided on an outer periphery thereof, and the mounting groove has the second vent and the third vent provided therein, wherein a second sealing ring and a third sealing ring are respectively installed on the outer periphery of the second vent and the third vent, wherein the bottom of the rotating disc abuts against the first sealing ring, the second sealing ring, and the third sealing ring, thereby dividing the mounting groove into a first chamber, a second chamber, and a third chamber.

3. The air extraction and exhaust device, as recited in claim 2, wherein the main machine shell has a first annular protrusion disposed therein, and the mounting groove is formed in the first annular protrusion; wherein the rotating disc has a relief groove at the corresponding position of the mounting groove, wherein the first sealing ring abuts against the outer peripheral edge of the relief groove, and the second sealing ring and the third sealing ring abut against the interior of the relief groove.

4. The air extraction and exhaust device, as recited in claim 3, wherein the first annular protrusion has an annular stepped surface provided thereon, the rotating disc has an annular recess provided at the bottom thereof, wherein the first sealing ring is installed between the annular stepped surface and the annular recess.

5. The air extraction and exhaust device, as recited in claim 2, wherein the mounting groove has a second annular protrusion and a third annular protrusion disposed therein, wherein the second annular protrusion and the third annular protrusion, respectively, have the second vent and the third vent disposed therein, and respectively have a second groove and a third groove for installing the second sealing ring and the third sealing ring.

6. The air extraction and exhaust device, as recited in claim 1, wherein the rotating disc has an arc-shaped protrusion arranged on an upper end surface thereof, and the arc-shaped protrusion has a limiting projection each arranged at both ends thereof, wherein the air extraction and exhaust device further comprises an inner frame disposed inside the main machine shell, wherein the inner frame has a mounting part disposed thereon for mounting the rotating disc and an arc-shaped limiting block disposed thereon that abuts against the limiting projection.

7. The air extraction and exhaust device, as recited in claim 1, wherein the motor has an output shaft and a drive wheel, and the rotating disc has wheel teeth arranged on an outer side wall thereof that engage with the drive wheel.

8. The air extraction and exhaust device, as recited in claim 1, wherein the rotating disc has a first interface for installing the first air pipe, and a second interface and a third interface for installing the second air pipe and the third air pipe provided at a side of the first interface.

9. A cold brew coffee machine, comprising an upper inner cup, a lower inner cup, and an outer cup, wherein an upper end of the upper inner cup is provided with an air extraction and exhaust device as recited in any one of claims 1-8.
